(19) Europäisches Patentamt / European Patent Office / Office européen des brevets

(11) **EP 1 981 212 B1**

(12) **EUROPEAN PATENT SPECIFICATION**

(45) Date of publication and mention
of the grant of the patent:
**03.06.2015 Bulletin 2015/23**

(51) Int Cl.:
***H04W 28/22*** *(2009.01)*

(21) Application number: **07007596.5**

(22) Date of filing: **13.04.2007**

(54) **Method and multi-homed communication device for dynamic transmission rate control**

Verfahren und Kommunikationsvorrichtung mit Multihoming zur dynamischen Steuerung der Übertragungsrate

Procédé et dispositif de communication à multihoming pour un contrôle de taux de transmission dynamique

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**15.10.2008 Bulletin 2008/42**

(73) Proprietor: **Deutsche Telekom AG**
**53113 Bonn (DE)**

(72) Inventors:
• **Alpcan, Tansu, Dr.**
**10625 Berlin (DE)**
• **Singh, Jatinder Pal, Dr.**
**10719 Berlin (DE)**

(74) Representative: **Kampfenkel, Klaus**
**Blumbach - Zinngrebe**
**Patentanwälte**
**Alexandrastrasse 5**
**65187 Wiesbaden (DE)**

(56) References cited:
**US-A1- 2006 193 295**

• **KULTIDA ROJVIBOONCHAI, TORU OSUGA, HITOSHI AIDA: "A Study on Rate-Based Multi-Path Transmission Control Protocol (R-M/TCP) Using Packet Scheduling Algorithm" IEICE TRANS. INF. & SYST., [Online] January 2006 (2006-01), pages 124-131, XP002450963 Retrieved from the Internet: URL:http://ietisy.oxfordjournals.org/cgi/r eprint/E89-D/1/124.pdf> [retrieved on 2007-09-14]**

**Description**

<u>Field of the invention</u>

The invention relates to a communication device which has access to a plurality of access networks and to a method for dynamic transmission rate control of such communication devices. Furthermore, the invention relates to a communication system comprising a plurality of such communication devices.

<u>Background of the invention</u>

Contemporary networks are heterogeneous in their attributes such as the supporting infrastructure, protocols, and offered data rates. The multitude and variety of existing and emerging wireless and wired networking technologies continue to be the driving force towards convergence of networks. It is commonplace today to have electronic devices with multiple networking capabilities. Personal computing devices, like for instance laptops, PDAs or smart phones, are typically equipped with several access systems ranging from different types of IEEE 802.11 wireless local area networks (WLAN) to Ethernet, GPRS, and UMTS.

On end-user devices a variety of applications emerge with different bandwidth requirements for multimedia access, gaming and collaboration. In an exemplary hypothetical scenario a user in a corporate setting participates in a video conference call via her device having both Ethernet and WLAN, e.g. based on IEEE 802.11g, connectivity. While engaged in the conference proceedings, the user is uploading content on a remote server for the participants to access and at the same time needs to retrieve some files from the server.

Multi-homed devices having multiple network interfaces to transmit data are described in US 2006/0015636 A1 for example. In US 2006/0015636 A1 also a method is described for selecting one of said multiple network interfaces for an application on the multi-homed device, particularly in the context of mobile devices where the network availability frequently changes, depending on selection criteria, like for instance data size, priority, transmission speed or cost. In US 2006/ 0193295 A1 an apparatus is described which enables a mobile terminal to communicate over multiple, heterogeneous network connections. The mobile terminal can distribute segments of traffic over a set of heterogeneous networks, wherein the rate control is similar to well-known TCP. Also in "A Study on Rate-Based Multi-Path Transmission control Protocol (R-M/TCP) Using Packet Scheduling Algorithm", K. Rojviboonchai et al., IEICE Trans. Inf. & Syst., Vol. E89-D, No.1, January 2006, a rate-based multi-path variation of the known TCP algorithm is described, wherein it is attempted to estimate the available bandwidth and the queue length of the used routes in order to fully utilize the bandwidth resources.

It is an object of the present invention to show a new and improved approach to control data transmission of a multi-homed communication device, i.e. a device which has access to multiple different access networks. Another object of the invention is to efficiently utilize multiple networks by a plurality of multi-homed communication devices.

<u>Summary of the Invention</u>

The inventive solution of the object is achieved by each of the subject matter of the respective attached independent claims. Advantageous and/or preferred embodiments or refinements are the subject matter of the respective attached dependent claims.

The inventive method for dynamic transmission rate control of a communication device, which is connectable to at least two different access networks, comprises the steps of establishing a data connection between the communication device and a destination node, routing through each of said different access networks a separate data flow associated with said data connection, wherein the transmission rate of each data flow is separately adjustable, estimating for each access network the available bandwidth for data transmission, calculating for each access network a control value depending on the estimated available bandwidth of the respective access network, and adjusting for each of said different access networks the transmission rate for the respective data flow.depending on the respective control value.

By dynamically adjusting the transmission rates of the data flows which are guided through the different access networks depending on estimated available bandwidths of the respective access networks, the method allows an efficient utilization of the data transmission capacity of the access networks. The method is especially advantageous if the data transmission capacity of at least one of said different access networks varies with time. Due to fading effects this is typically the case for wireless access networks, but due to background traffic can also be the case for wired access networks. The different access networks can for instance comprise networks based on Ethernet, WLAN, GPRS, UMTS, DSL and/or Bluetooth, but any other access, technology with varying data transmission capacity can also be utilized.

The establishing of said data connection can for instance be initiated by an application which is executed on the communication device, wherein the application makes a bandwidth request to a middleware of the communication device which dynamically handles the allocation of data transmission rates for each of the access networks. The destination node can be for instance either directly reachable via the access networks or alternatively via a core network to which the access networks are connected, wherein said core network can for instance be a company-wide LAN (Local Area Network) or the internet.

For dynamically adjusting the transmission rates of the data flows through the different access networks with advantage the steps of estimating for each access network the available bandwidth for data transmission, calculating for each access network a control value depending on the estimated available bandwidth of the respective access network, and adjusting for each of said different access networks the transmission rate for the respective data flow depending on the respective control value are performed repeatedly at pre-defined times, wherein with special advantage a feedback control for adjusting the transmission rate for each of said different access networks is thereby established.

For the feedback control different feedback control algorithms can be utilized, like for instance the linear' quadratic Gaussian (LQG) control or an additive increase/ multiplicative decrease (AIMD) algorithm. The inventors however found out that the utilization of an $H^\infty$-optimal control algorithm is most advantageous, as will be shown later on. Accordingly, said feedback control preferably is an $H^\infty$-optimal control adapted to minimize a pre-defined cost functional, wherein the control value is calculated by means of an $H^\infty$-controller.

A general overview of H-infinity ($H^\infty$) optimal control can be found in the book by T. Basar and P. Bernhard "H-infinity Optimal Control and Related Minimax Design Problems: A Dynamic Game Approach", 2nd ed. Boston, MA: Birkhauser, 1995.

Estimating the available bandwidth for data transmission of the access networks typically can be performed only with a limited accuracy, resulting in estimation errors. A perfectly efficient usage of the data transmission capacity of the access networks therefore typically is not possible. Furthermore, adjustments of the data transmission rate preferably are kept as small as possible. Accordingly, the feedback control preferably is adapted to simultaneously maximize usage of the data transmission capacity of the respective access network and minimize fluctuations in the transmission rate of the respective data flow resulting from adjustments. As the inventors found out, this is especially the case when utilizing $H^\infty$-optimal control.

In a preferred embodiment of the method the control value is calculated depending on a predefined preference for at least one of said different access networks, resulting in a higher data transmission rate for the at least one preferred access network. Said preference advantageously is represented by a matrix due to the mathematical representation of the $H^\infty$-optimal control algorithm.

The preference typically is defined depending on certain requirements of the application which is executed on the communication device and which makes the according bandwidth request. Such requirements can for instance be requirements with respect to a delay time of the access network. Since the characteristics of the access networks, such as for instance the delay time, also can vary with time, the method advantageously comprises the steps of measuring at predefined times predetermined network characteristics of at least one of said different access networks, and updating said pre-defined preference depending on the measured network characteristics.

The predetermined network characteristics for instance comprise the available bit rate (ABR) and/or a delay time of at least one of said different access networks. In an IP-based access network a typical delay time is the round trip delay of an IP packet.

Several traffic flows are hence created by the device which dynamically monitors the networks at its disposal. The device then routes the flows via these networks and dynamically reassigns them to different networks based on the varying network characteristics like available bit rate (ABR) and delay. While the distribution of traffic flows amongst different networks can enable better network utilization than single network use at a time, the variation in network characteristics like ABR and delay makes the problem of flow control and assignment challenging. However, by the described method a fair and robust feedback control scheme is provided.

The above described feedback control, comprising the steps of establishing a data connection between a communication device and a destination node, wherein through each of at least two different access networks a separate data flow associated with said data connection is routed, and repeatedly for each access network estimating the available bandwidth for data transmission, calculating a control value depending on the estimated available bandwidth, and adjusting the transmission rate for the respective data flow depending on the respective control value, preferably is performed separately and independently for a plurality of communication devices simultaneously accessing said at least two different access networks.

The design of the feedback control, especially by utilizing $H^\infty$-optimal control, preferably is adapted to provide a fair distribution of bandwidth for data transmission among said plurality of communication devices, and/or to maximize overall capacity usage of said different access networks by said plurality of communication devices, and/or to minimize adjustments to the transmission rates.

An exemplary definition of a fair distribution of bandwidth for data transmission among the plurality of communication devices comprises that, when congestion arises, no transmission rate of a data flow can be increased without decreasing the transmission rate of another data flow, the transmission rate of which is already smaller. This is the known definition of max-min fairness. However, the described method is not limited to this fairness definition, but can also with advantage comprise any other fairness criterion, like for instance proportional fairness. The simplest criterion for fairness would be to provide essentially equal bandwidths for data transmission to each of the plurality of communication devices in a congested environment, wherein a congested environment results if the overall bandwidth requested by the plurality of communication devices exceeds the data transmission capacity of the access networks.

An inventive communication device adapted to establish a data connection to a destination node, wherein separate data flows associated with said data connection are routed through ,at least two different access networks, comprises at least two network interfaces each associated with a respective one of said different access networks, bandwidth estimating means for determining an estimated value of the available bandwidth for data transmission for each of said different access networks, calculating means for calculating a control value for each of said different access networks depending on an estimated available bandwidth of the respective access network provided by said bandwidth estimating means, and for each of said network interfaces means for adjusting the transmission rate of a data flow routed through the respective interface using a respective control value provided by said calculating means. The data connection typically is established in response to a request from an application running'on the communication device.

The bandwidth estimating means, the calculating means and the means for adjusting the transmission rate preferably are arranged in a middleware and can comprise hardware and/or software components.

The network interfaces of the communication device exemplary are adapted for accessing an access network which is based on Ethernet, WLAN, GPRS, UMTS, DSL and/or Bluetooth. The invention however is not limited to these types of access networks, but also any other wireless or wired, also future, access network lies within the scope of the invention and therefore also a communication device provided with a respective network interface. Furthermore, although the focus of the invention lies on communication devices having access to different access networks via different network interfaces, the inventive method can also be applied to communication devices which are provided with multiple different network interfaces for accessing the same access network, wherein the different network interfaces can comprise hardware and/or software components.

In order to provide a feedback control the bandwidth estimating means preferably is adapted to determine an estimated value of the available bandwidth for each of said different access networks repeatedly at pre-defined times. Accordingly, the calculation'means with advantage is provided as a feedback control unit adapted to establish a feedback control for adjusting the transmission rate for each of said different access networks.

As described above, the inventors found out that the utilization of $H^\infty$-optimal control is most preferable. Therefore, the feedback control unit preferably is adapted to calculate an $H^\infty$-controller based on an $H^\infty$-optimal control model for minimizing a pre-defined cost functional.

The feedback control unit preferably is adapted to establish a feedback control for each of said different access networks which simultaneously maximizes usage of the data transmission capacity of the respective access network and minimizes fluctuations in the transmission rate of the respective data flow resulting from adjustments, since typically the estimated values of the available bandwidth provided by the bandwidth estimating means only have limited accuracy.

$H^\infty$ analysis and design allow for the coupling between different communication devices to be relaxed by treating the dynamics for each device as independent of the others and for nevertheless achieving fair and robust rate allocation for the devices and an efficient utilization of the access networks..

Accordingly, the feedback control unit with advantage is adapted for adjusting the transmission rates for each of said different access networks in such a way that, when said device accesses said at least two different access networks as one of a plurality of similar'communication devices simultaneously accessing said different access networks, a fair distribution of bandwidth for data transmission is provided among said plurality of communication devices and/or, overall capacity usage of said different access networks by said plurality of communication devices is maximized, and/or adjustments to transmission rates performed by the,feedback control units of the plurality of communication devices is minimized.

Since different applications executable on the communication device can have different preferences with respect to certain characteristics of the access networks, like for instance a delay time of the network, the calculation means preferably is adapted to calculate a control value depending on a pre-defined preference for at least one of said different access networks, wherein said pre-defined preference with advantage is provided by a matrix representation stored in a memory unit of the device.

Since the network characteristics also can vary with time, the communication device advantageously comprises means for measuring at predefined times predetermined network characteristics of at least one of said different access networks, wherein said communication device is adapted to update said predefined preference depending on measured network characteristics. Examples of relevant network characteristics comprise the available bit rate and/or a delay time of at least one of said different access networks.

Furthermore, the invention encompasses a communication system, which comprises at least two different access networks and a plurality of communication devices as described above, simultaneously connectable to said different access networks. Depending on the application said at least two different access networks also with advantage can be connected to a core network.

The invention provides a novel robust rate control method and system for heterogeneous network access by devices with multihoming capabilities. Towards this end, an H-infinity ($H^\infty$) optimal control formulation is proposed for allocating rates to devices on multiple access networks with heterogeneous time-varying characteristics. In such a setting, the problem of efficient utilization of multiple access networks, wireless and/or wireline, by devices via optimal and robust control of traffic rates with minimal communication overhead is addressed. A communication device middleware functionality is proposed that monitors network characteristics and achieves fair and robust rate allocation for the communication devices.

Furthermore, an efficient utilization of the access networks is established through an equilibrium analysis in the static case. $H^\infty$ analysis and design allow for the coupling between different devices to be relaxed by treating the dynamics for each device as independent of the others.

Brief Description of the Figures

It is shown in

Fig. 1 a schematic view of an exemplary embodiment of a communication device having access to three different access networks,

Fig. 2 a schematic view of exemplary components of the communication device shown in Fig. 1,

Fig. 3 a schematic view of an exemplary embodiment of a communication system comprising a plurality of communication devices which concurrently share three different access networks,

Fig. 4 an aggregate flow rate and an available capacity on a first access network under $H^\infty$-optimal control,

Fig. 5 an aggregate flow rate and an available capacity on a second access network under $H^\infty$-optimal control,

Fig. 6 an aggregate flow rate and an available capacity on a third access network under $H^\infty$-optimal control,

Fig. 7 transmission rates of two representative data flows on said first access network under $H^\infty$-optimal control,

Fig. 8 transmission rates of two representative data flows on said second access network under $H^\infty$-optimal control,

Fig. 9 transmission rates of two representative data flows on said third access network under $H^\infty$-optimal control,

Fig. 10 an aggregate flow rate and an available capacity on said first access network under AIMD control,

Fig. 11 an aggregate flow rate and an available capacity on said first access network under LQG control,

Fig. 12 transmission rates of individual data flows with random starting points on said first access network under $H^\infty$-optimal control,

Fig. 13 transmission rates on said first access network with a varying number of active communication devices, and

Fig. 14 an aggregate flow rate and an available capacity on-said first access network under $H^\infty$-optimal control and with a varying number of active communication devices.

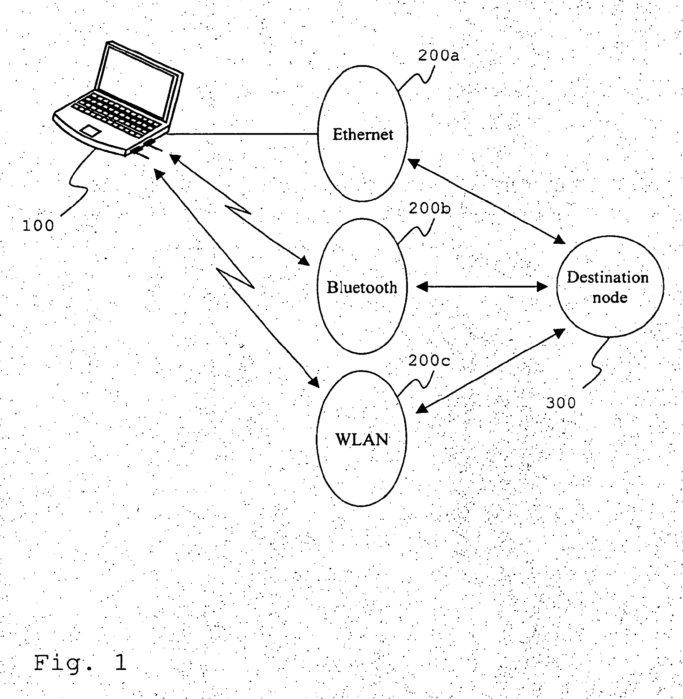

Fig. 1 shows a schematic view of an exemplary embodiment of a communication device 100 having access to three different access networks 200a, 200b and 200c. By accessing the access networks a data connection can be established with a destination node 300. In the shown embodiment.the access networks comprise an Ethernet 200a, a Bluetooth 200b and a WLAN 200c network.

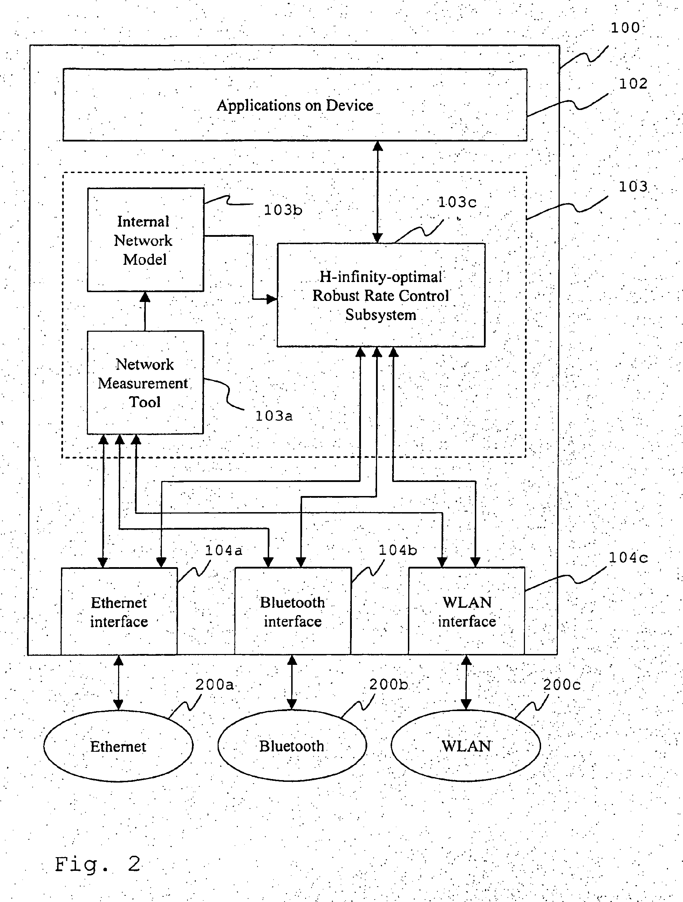

Fig. 2 illustrates the system architecture of the example communication device 100 of Fig. 1 which accesses multiple networks 104 which in the shown example include LAN (Ethernet) 200a, Bluetooth 200b and Wi-Fi (802.11x). 200c. The communication device 100 is provided with respective different network interfaces 104a, 104b and 104c for accessing the different access networks. The applications 102 on the device 100 make bandwidth requests to the middleware 103 which ensures that the device gets a fair amount of bandwidth from each network. The middleware 103 takes into account application preferences for individual networks, for example due to delay requirements (see Equations (3) and (4)).

The network measurement tool 103a continuously measures the available bandwidth of each network in 104. These quantities are represented by the vector $w$ as discussed in Section "Network Model". The module 103a passes $w$ to the internal network model subsystem 103b which utilizes it as an input to Equation (1) (cf. Section "Robust Flow Control"). The output of the internal network model subsystem 103b denoted by $x_d$ along with the cost function in Equations (3) and (4) constitute the inputs to the H-infinity-optimal Robust Rate Control Subsystem 103c which computes the control output $u_d$ as well as the rate allocation update to each network as given by Equation (2).

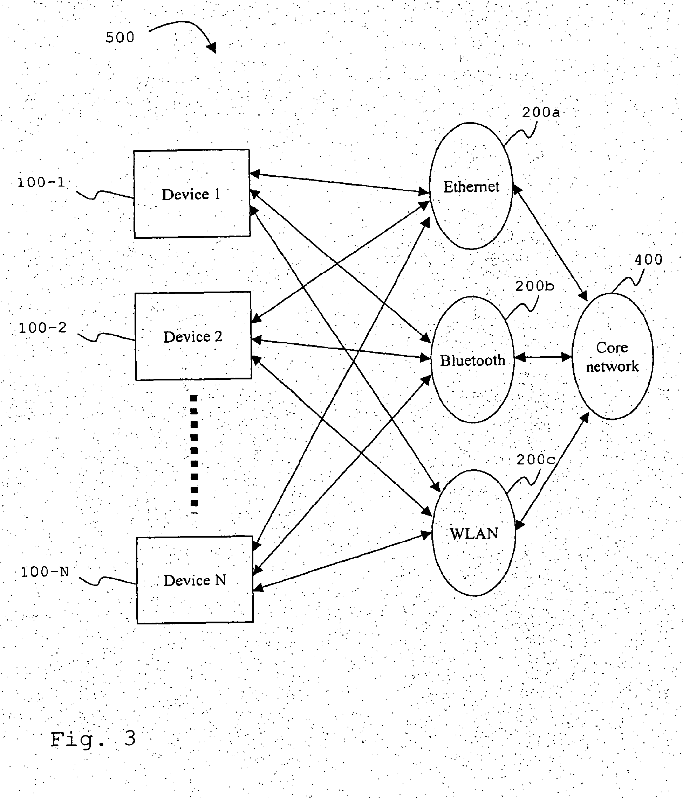

Fig. 3 depicts an exemplary communication system 500 comprising multiple communication devices 101-1 to 100-N, which are essentially identical to communication device 100, sharing the multiple networks 200a, 200b and 200c. It is important to note that the devices do not share any explicit information among each other and make independent rate allocation decisions. Notwithstanding, the H-infinity-optimal control method developed results in a fair and robust rate sharing scheme among such devices as demonstrated in the simulations described later on. In the shown embodiment the access networks 200a, 200b and 200c are all connected to a core network 400, thereby enabling the establishing of data connections between the communication devices 100-1 to 100-N and a destination node which has access to said core network 400.

Network model

In this section an analytical model of the heterogeneous access network environment is presented. A set of access networks $I := \{1, 2,...,I\}$ simultaneously available to multiple devices is considered. The set of such devices sharing these networks shall be defined as $D := \{1, 2,...,D\}$. The assignment and control of flows originating from these devices on these access networks constitute the underlying resource allocation problem it is one of the objects of the present invention to solve. The nonnegative flow rate a device $d \in D$ assigns to each available network $i \in I$ shall be

$$\mathbf{r}_d := [r_d^{(1)}, r_d^{(2)}, \ldots, r_d^{(I)}].$$ Consequently, the total flow rate on network $i$ is $R^{(i)} = \sum_{d=1}^{D} r_d^{(i)}$. An important

property of the access networks investigated herein is the high variability of the network capacity $C^{(i)}(t)$, where $t$ denotes time. The available bandwidth $B^{(i)}$ on a network is then given by $B^{(i)}(t) := C^{(i)}(t) - \sum_{d=1}^{D} r_d^{(i)}(t)$. Each

device can estimate via various online measurement tools the quantity $w^{(i)} := \phi(B^{(i)}(t))$, where the function $\phi(\cdot)$ is approximately proportional to its argument, i.e. the available bandwidth $B^{(i)}$. Next a linear system formulation and an H$^\infty$ controller that optimizes the network usage is introduced and investigated.

Robust flow control

Most of the access networks available to a device at a given time are wireless ones. The characteristics of a (wireless) network $i \in I$, and hence, its available bandwidth $B^{(i)}$ fluctuates randomly due to fading effects in the case of wireless networks as well as background traffic. Here, it is not attempted to model this quantity but a function of it $w^{(i)}(B^{(i)})$ is taken simply as an input to devices. No assumptions are made on the nature of this function which captures the random variations in available bandwidth due' to channel state and other factors.
Next a system from the perspective of a device $d \in D$ is defined which keeps track of the available bandwidth of a single access network. The system state $x_d^{(i)}$ reflects from the perspective of device $d$ roughly the bandwidth availability on network $i$. In order to simplify the analysis in this section the focus is on the single network case and the superscript $i$ is dropped for notational convenience. Then, the system equation for device $d$ is

$$\dot{x}_d = a\, x_d + b\, u_d + w, \qquad\qquad (1)$$

where $u_d$ represents the control action of the device. The parameters $a < 0$ and $b < 0$ adjust the memory horizon, the smaller $a$ the longer the memory, and the "expected" effectiveness of control actions, respectively, on the system state $x_d$. The device $d$ bases its control actions on its state which not only takes as input the current available bandwidth but also accumulates the past ones to some extent. It is also possible to interpret this system as a low pass filter with input $w$ and output $x$.
A rate update scheme shall be defined which is approximately proportional to the control actions:

$$\dot{r}_d = -\phi r_d + u_d; \qquad\qquad (2)$$

where $\phi > 0$ is sufficiently small. Although this rate update scheme seems disconnected from the system in equation (1), it is not the case as will be shown in the upcoming sections. As a result of $w$ being a function of the available bandwidth $B$, which in turn is a function of the aggregate user rates, the systems described by equations (1) and (2) are connected via a feedback loop. It is additionally noted that it is resorted here to a "bandwidth probing scheme" in a sense similar to additive-increase multiplicative-decrease (AIMD) of the well known transfer control protocol (TCP). On the other hand, the main parameters of the scheme described herein follow from an optimization problem which will be defined next.
Now the question of how to calculate the rate control action $u_d$ of a device is addressed. To be able to do so, first the objectives based on the full bandwidth-utilization criterion are formulated. The following observations are made on the system described by equations (1) and (2): First, the input $w$ is zero if all devices fully use the available bandwidth on the access network. Second, the system is stable, i.e., the state converges to zero unless $w$ and $u_d$ are nonzero. Third, the rate change is a function of control actions $u_d$. Finally, the control actions $u_d$ have a direct effect on the state $x_d$. Thus, the objectives of the optimal controller can be formulated as minimizing $w$, the state $x$, and the control actions *u*, or squares thereof. These objectives ensure that the input or "disturbance" to the system is rejected, i.e. maximum capacity usage is provided, while preventing excessive rate fluctuations leading to instabilities and jitter.

H∞-optimal control

In order to achieve the objectives defined above without explicitly making any assumptions on *w* H∞ optimal control theory is utilized. It provides a powerful framework that allows for a worst-case analysis of disturbance attenuation problems. H∞ analysis allows for the coupling between different devices to be ignored. Furthermore, the dynamics for each device are treated as independent of the others and driven by unknown disturbances. By viewing the disturbance, here the available bandwidth, as an intelligent maximizing opponent in a dynamic zero-sum game who plays with knowledge of the minimizer's control action, the system is evaluated under the worst possible conditions, in terms of capacity usage. Then the control action is determined that will minimize costs or achieve the objectives defined under these worst circumstances.

The system described can be classified as continuous-time with perfect state measurements due to the state $x_d$ being an internal variable of device *d*. It is conducted an H∞-optimal control analysis and design taking this into account. First, the controlled'output shall be introduced:

$$z(t) := [hx_d(t) \quad gu_d(t)]^T, \tag{3}$$

where *g* and *h* are positive parameters. The cost of a device that captures the objectives defined and for the purpose of H∞ analysis is

$$L_d(x, u, w) = \frac{\|z_d\|}{\|w\|}, \tag{4}$$

where $\|z_d\|^2 = \int_0^\infty |z|^2 \, dt$ .

Although being a ratio, it will be referred to $L_d$ as the (device) cost in the rest of the analysis. It captures the proportional changes in $z_d$ due to changes in *w*. If $\|w\|$ is very large, the cost $L_d$ should be low even if $\|z_d\|$ is large as well. A large $\|z_d\|$ indicates that the state and the control have high values reflecting and reacting to the situation, respectively. However, they should not' grow unbounded which is ensured by a low cost, $L_d$. For the rest of the analysis, the subscript *d* will be dropped for ease of notation.

H∞-optimal control theory guarantees that a performance factor will be met. This factor is also known as the H°° norm $\gamma$ and can be thought of as the worst possible value for the cost *L*. It is bounded below by

$$\gamma^* := \inf_u \sup_w L(u, w), \tag{5}$$

which is the lowest possible value for the parameter $\gamma$. It can also be interpreted as the optimal performance level in this H∞ context. Interestingly, it is assumed here that the available bandwidth is "controlled" by a maximizing player who plays second in this formulation knowing the control applied by the minimizing player or device. This formulation as well as the order of play ensures that indeed the worst case scenario is analyzed.

In order to solve for the optimal controller $\mu(x)$, a corresponding differential game is defined, which is parameterized by $\gamma$,

$$J_\gamma(u, w) = \|z\|^2 - \gamma^2 \|w\|^2. \tag{6}$$

The maximizing' player (Murphy) tries to maximize this cost function while the objective of a device is to minimize it. The optimal control action $u = \mu_\gamma$ can be determined from this differential game formulation for any $\gamma > \gamma^*$.

This controller is expressed in terms of a relevant solution, $\sigma_\gamma$, of a related game algebraic Riccati equation

(GARE) :

$$2a\sigma - \left(\frac{b^2}{g^2} - \frac{1}{\gamma^2}\right)\sigma^2 + h^2 = 0 \qquad (7)$$

By the general theory [12], the relevant solution of the GARE is the "minimal" one among its multiple nonnegative-definite solutions. However, in this case, since the GARE is scalar, and the system is open-loop stable (that is, $a < 0$), the GARE (which is a quadratic equation) admits a unique positive solution for all $\gamma > \gamma^*$, and the value of $\gamma^*$ can be computed explicitly in terms of the other parameters. Solving for the roots of (7) delivers:

$$\sigma_\gamma = \frac{-a \pm \sqrt{a^2 - \lambda h^2}}{\lambda}$$

where

$$\lambda := \frac{1}{\gamma^2} - \frac{b^2}{g^2}.$$

The parameter A could be both positive and negative, depending on the value of $\gamma$, but for $\gamma$ close in value to $\gamma^*$ it will be positive. Further, $\gamma^*$ is the smallest value of $\gamma$ for which the GARE has a real solution. Hence,

$$\gamma^* = \left[\sqrt{\frac{a^2}{h^2} + \frac{b^2}{g^2}}\right]^{-1}$$

Finally, a controller that guarantees a given performance bound $\gamma > \gamma^*$ is:

$$\mu_\gamma(x) = -\left(\frac{b}{g^2}\sigma_\gamma\right)x, \qquad (8)$$

This is a linear feedback controller operating on the device system state $x$, which can be calculated offline using only the linear quadratic system model and for the given system and cost parameters.

Equilibrium analysis for static capacity

The H$^\infty$-optimal rate controller which has been derived in the previous section has the general form $u = \theta x$, where $\theta$ is a positive constant. An equilibrium analysis is conducted of the system described by equations (1) and (2) under this linear feedback controller for a single network of fixed capacity $C$ and accessible by $D$ devices. By ignoring the noise in the system the simplifying assumption is made of $w := C - \sum_{i=1}^{D} r_i$ and let $d = 1$. Then,

$$\dot{x}_i = a\,x_i + b\,\theta x_i + C - \sum_{k=1}^{D} r_k$$

$$\dot{r}_i = -\phi r_i + \theta x_i, \quad i = 1, \ldots, D.$$

At the equilibrium -if exists- we have $\dot{x}_i = \dot{r}_i = 0 \ \forall i$. Solving for equilibrium values of $x_i$ and $r_i$ for all $i$, it is easy to obtain

$$r_i = \frac{\theta\left(C - \sum_{j \neq i} r_j\right)}{\theta - \phi(a + b\theta)}.$$

It is noted that as $\phi \to 0$ we have $\sum_i r_i \to C$. Thus, the H$^\infty$-optimal controller ensures maximum network usage when the capacity $C$ is fixed and there is no noise as $\phi$ approaches zero.

Alternative controller formulation

Having established and analyzed the H$^\infty$-optimal controller for the system at hand, variations of it and other formulations are described. One possible formulation is the well known linear quadratic Gaussian (LQG) problem where the input $w$ is modeled as a Gaussian noise. Although this assumption probably does not hold for the problem at hand the LQG is used as a comparison case. It can be obtained here simply as the limit of the H$^\infty$ problem as $\gamma \to \infty$. As the $\|z\|^2$ the expected value of $\int_0^\infty |^2\, dt$ is used, which again is denoted by $\|z\|^2$ by a slight abuse of notation.

As an alternative, a simple AIMD controller is defined as another comparison scheme:

$$\dot{r}_d = \begin{cases} \alpha & , \text{if } w > 0 \\ -\beta r & , \text{if } w < 0 \end{cases}, \tag{9}$$

where $\alpha$ and $\beta$ are positive parameters.

Illustrative example

The H$^\infty$-optimal controller is illustrated with an example. The cost and system parameters are chosen simply as $a = -1$, $b = -1$, $g = 1$, $h = 1$. Then, $\gamma^* = \sqrt{2}/2 \approx 0.707$. If $\gamma = \gamma^*$ is chosen, then the unique positive solution of the GARE is $\bar{\sigma}_{\gamma^*} = 1$ which leads to the simple feedback controller $\mu_{\gamma^*}(l) = x$.

This result is compared analytically with the LQG formulation where $\gamma \to \infty$. Then, the GARE, $\sigma^2 + 2\sigma - 1 = 0$, simply yields the unique positive solution $\bar{\sigma}_\gamma \approx \sqrt{2} - 1$, which leads to $\tilde{\mu}_\gamma(x) \approx (\sqrt{2} - 1)x$. It is observed that despite the same cost structure the H$^\infty$ controller is more "aggressive" in order to ensure an upper bound on the cost $L$ regardless of $w$. On the other hand, the LQG controller has a lower feedback gain possibly due to the inherent Gaussian noise assumption on $w$.

H$^\infty$-optimal control for multiple networks

In the previous section the analysis and controller design for a single access network has been provided shared by multiple devices to increase readability and focus on core concepts by keeping the notation simple. Now the H$^\infty$-optimal control formulation is provided for the general case of multiple access networks for a single device $d \in D$ and the subscript $d$ is dropped again for ease of notation.

It shall be defined $\mathbf{x} := [x^{(i)}]$, $\mathbf{r} := [r^{(i)}]$, and $\mathbf{u} := [u^{(i)}]$ for all $i \in I$. Then, the counterpart of the system described by equations (1) and (2) is given by

$$\dot{\mathbf{x}} = A\mathbf{x} + B\mathbf{u} + D\mathbf{w}$$
$$\dot{\mathbf{r}} = -\Phi\mathbf{r} + \mathbf{u}, \tag{10}$$

where $\mathbf{w} := [w^{(i)}] \; \forall i$. Here, the matrices $A$, $B$, and $\Phi$ are obtained simply by multiplying the identity matrix by $a$, $b$, and $\phi$, respectively.

The counterpart of the *controlled output* in (3) is

$$\mathbf{z}(t) := H\mathbf{x}(t) + G\mathbf{u}(t), \tag{11}$$

where it is assumed that $G^T G$ is positive definite, and that no cost is placed on the product of control actions and states: $H^T G = 0$. The matrix $H$ represents a cost on variation from zero state, i.e. full capacity usage. It shall in addition be defined $Q := H^T H$.

Next it is defined the cost

$$L(\mathbf{x}, \mathbf{u}, \mathbf{w}) = \frac{\|\mathbf{z}\|}{\|\mathbf{w}\|}, \tag{12}$$

where $\|\mathbf{z}\|^2 := \int_0^\infty |\mathbf{z}(t)|^2 dt$ and the corresponding differential game parameterized by $\gamma$,

$$J_\gamma(\mathbf{u}, \mathbf{w}) = \|\mathbf{z}\|^2 - \gamma^2 \|\mathbf{w}\|^2 \tag{13}$$

as in previous sections.

The corresponding GARE

$$A^T Z + Z A - Z(B(G^T G)^{-1} B^T - \gamma^{-2} D D^T)Z + Q = 0, \tag{14}$$

admits a unique minimal nonnegative definite solution $Z_\gamma$, which exist if $(A,B)$ is stabilizable and $(A,H)$ detectable. Thus, it is obtained the $H^\infty$-optimal linear feedback controller for the multiple network case:

$$\mu_\gamma(\mathbf{x}) = -(G^T G)^{-1} B^T \bar{Z}_\gamma \mathbf{x}. \tag{15}$$

Stimulations

The inventors performed measurement tests to collect traces of the available bandwidth on various WLANs and Ethernet. Through simulations, the $H^\infty$ optimal control scheme which is preferably utilized by the invention is compared with AIMD and LQG schemes. In the following the efficiency, fairness, and robustness of the $H^\infty$ optimal rate controller are demonstrated via simulations using the measured real world network characteristics.

The $H^\infty$-optimal controller is simulated in a scenario where 20 devices share three different network interfaces with varying available bandwidths obtained from real world measurements. The parameters are $a = -1$, $b = -1$, $g = 1$ and chosen to be the same over all three networks resulting in $G$ to be identity matrix and $A$ and $B$ to be negative identity matrices. For the last 15 devices the $Q$ matrix is chosen as identity matrix while for the first 5 devices it is

$$Q = \begin{bmatrix} 1 & 0 & 0 \\ 0 & 4 & 0 \\ 0 & 0 & 1 \end{bmatrix},$$

which indicates a preference for network 2 due to, for example, favorable delay characteristics and nature of applications running on these devices. Hence, the controllers $u1$ and $u2$ for the first 5 and last 15 devices, respectively, are

$$u1 = \begin{bmatrix} 0.5 & 0 & 0 \\ 0 & 3.9 & 0 \\ 0 & 0 & 0.5 \end{bmatrix} \cdot \begin{bmatrix} x^{(1)} \\ x^{(2)} \\ x^{(3)} \end{bmatrix},$$

$$u2 = \begin{bmatrix} 1 & 0 & 0 \\ 0 & 1 & 0 \\ 0 & 0 & 1 \end{bmatrix} \begin{bmatrix} x^{(1)} \\ x^{(2)} \\ x^{(3)} \end{bmatrix}.$$

The corresponding $\gamma^*$ are calculated as 0.895 and 0.707, respectively.

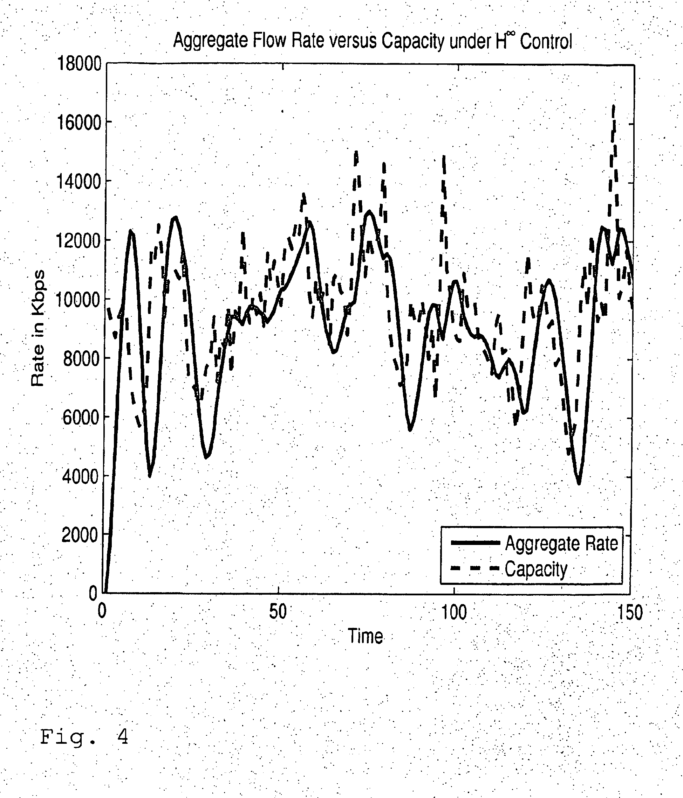

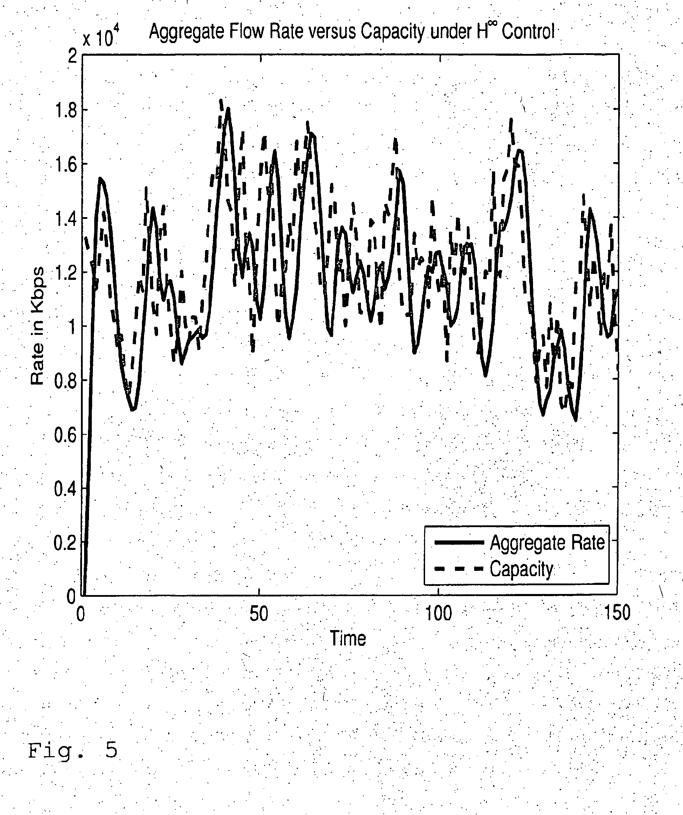

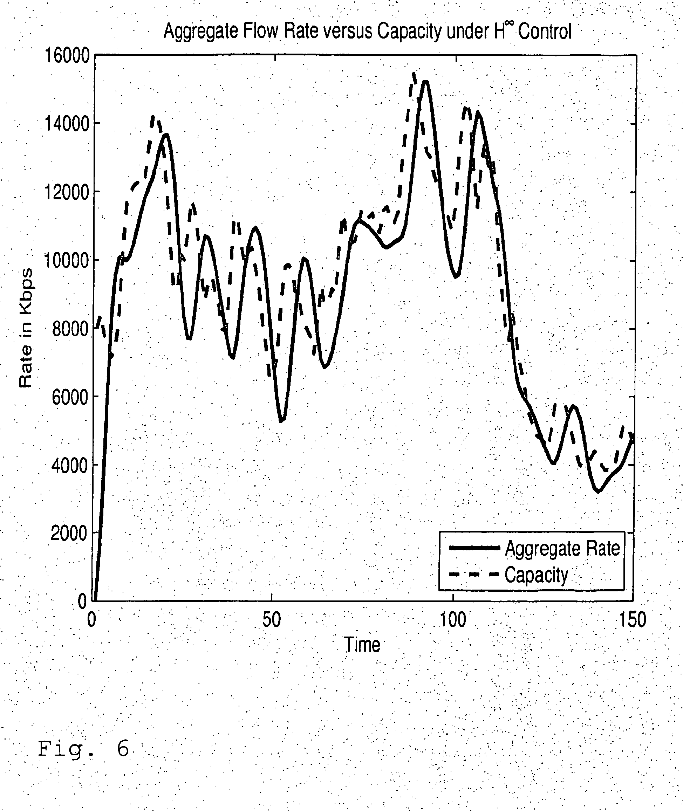

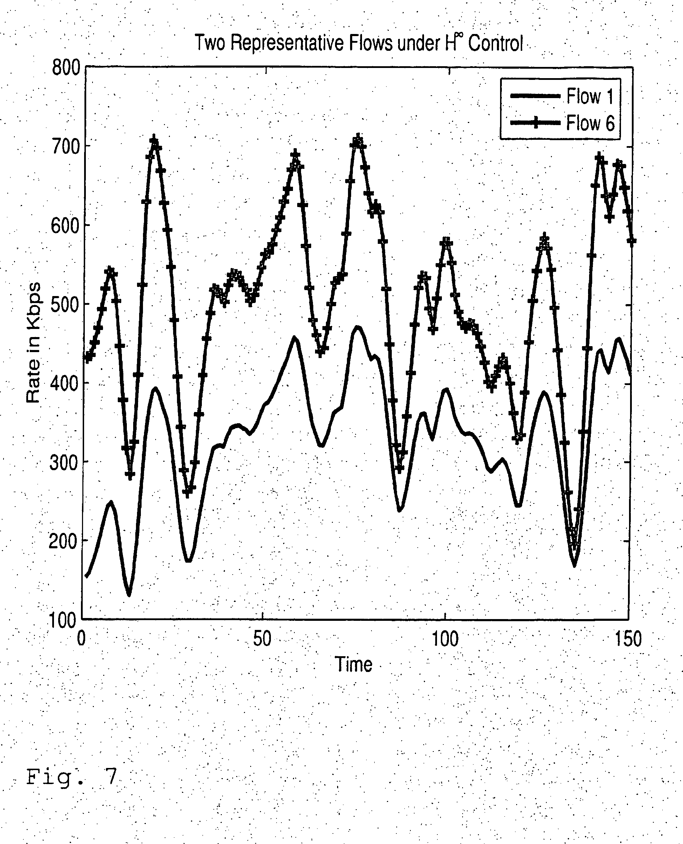

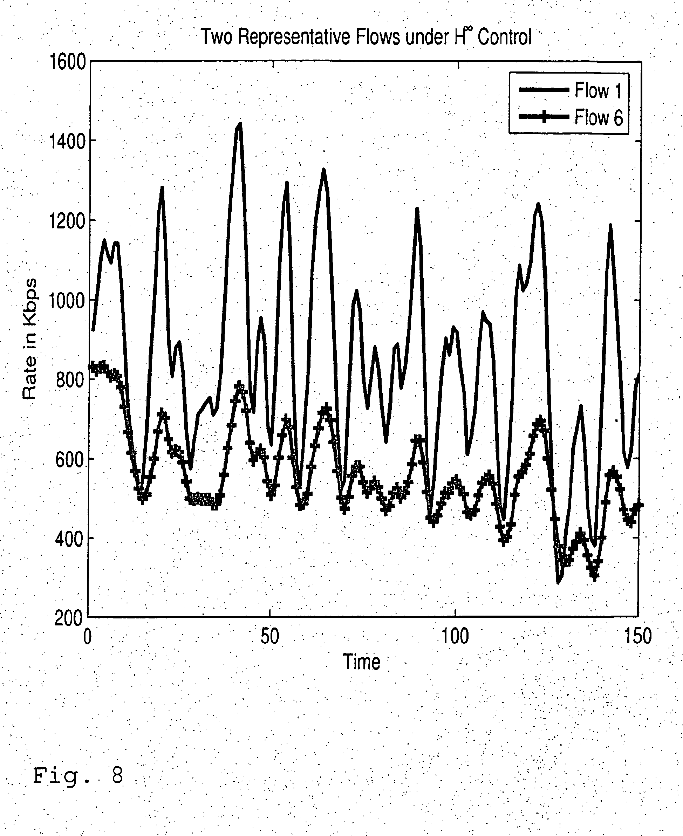

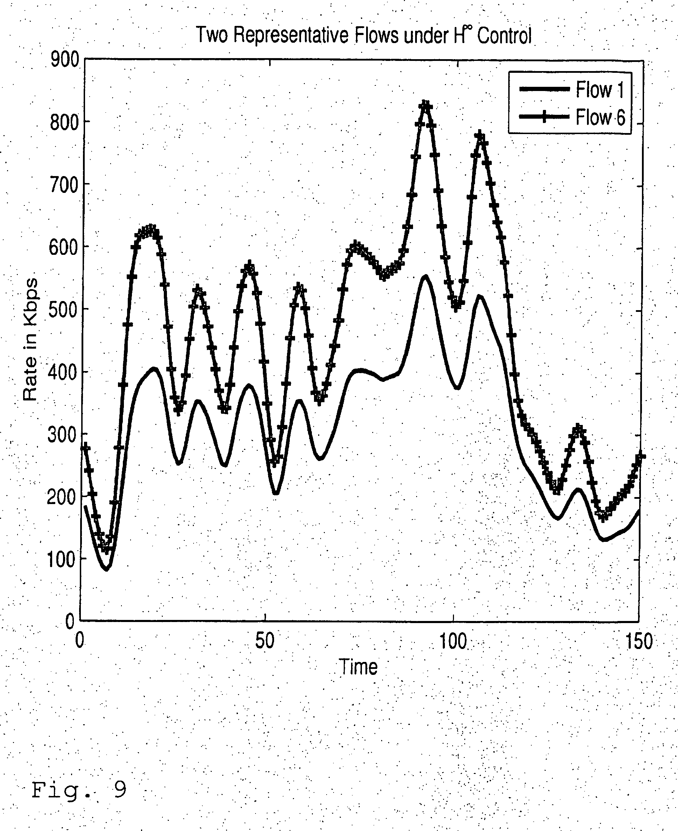

The resulting aggregate flow rates and capacity of each network are depicted in Figs. 4, 5, and 6. The average capacity usage on the networks are 88.2%, 89.2%, and 89.9%, respectively. The corresponding individual flows of devices on each network are shown in Figs. 7, 8 and 9. As expected, the 5 devices with a preference for network 2 get a higher share of bandwidth on it.

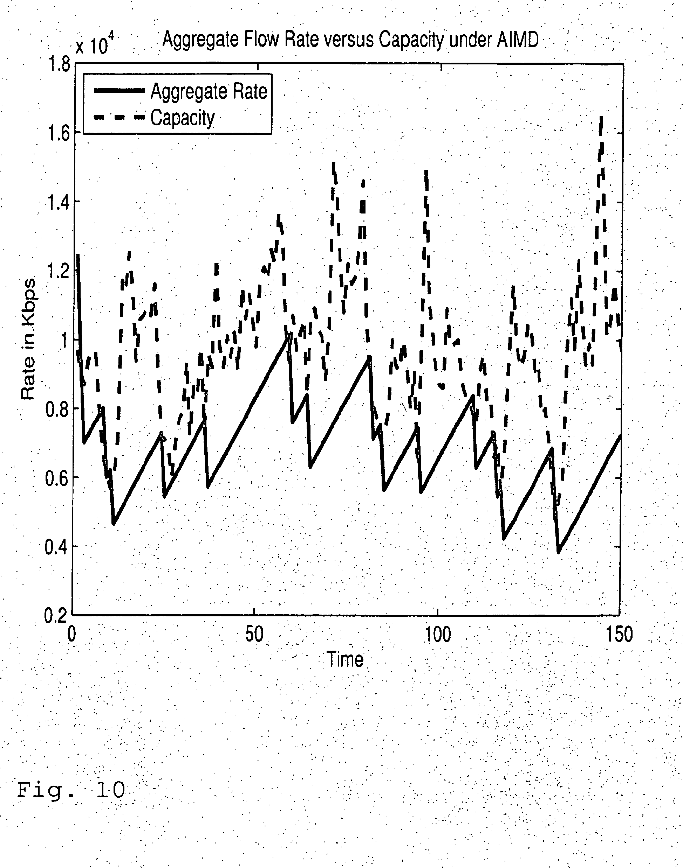

Next it is compared the $H^\infty$-optimal controller with the AIMD scheme with parameters $\alpha$ = 10 and $\beta$ = 0.75 for 20 symmetric devices on network 1. The results are depicted in Fig. 10. It is observed that the average capacity usage under the AIMD controller is only 74.6% and the $H^{\circ\circ}$-optimal controller outperforms AIMD in this aspect. In addition, the flow rates fluctuate less under the $H^{\circ\circ}$ scheme despite a careful choice of AIMD parameters.

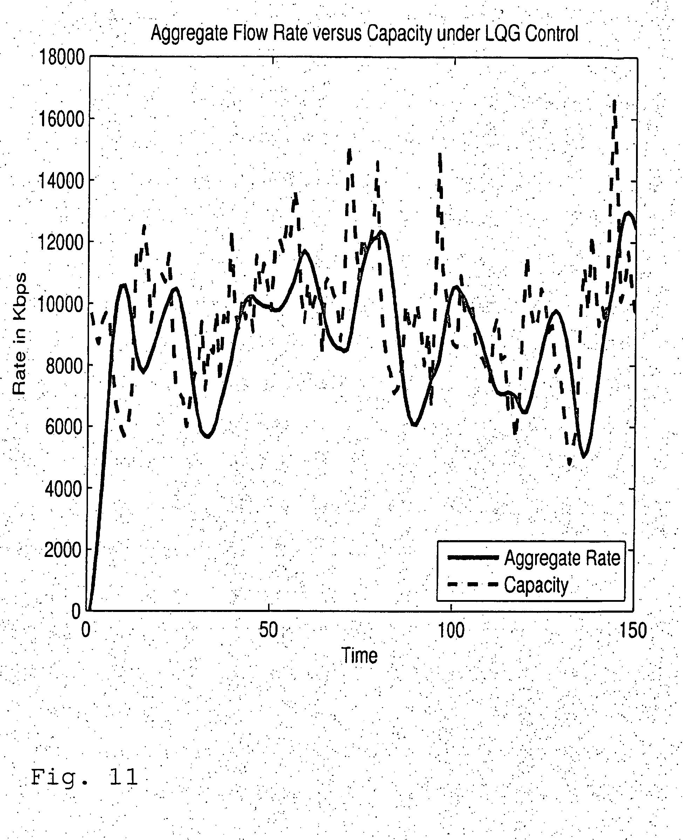

As a second comparison, it is simulated the LQG controller within the same environment. As shown in Figure 11 the LQG performs better than the AIMD, but worse than the $H^\infty$-optimal controller with an average capacity usage of 85.6%.

It is observed that the aggregate flow rate does not follow the capacity as closely as it was the case with the $H^\infty$-optimal control. It is also important to note that the LQG scheme does not provide a minimum performance guarantee on the cost $L$ whereas $H^\infty$ control ensures one.

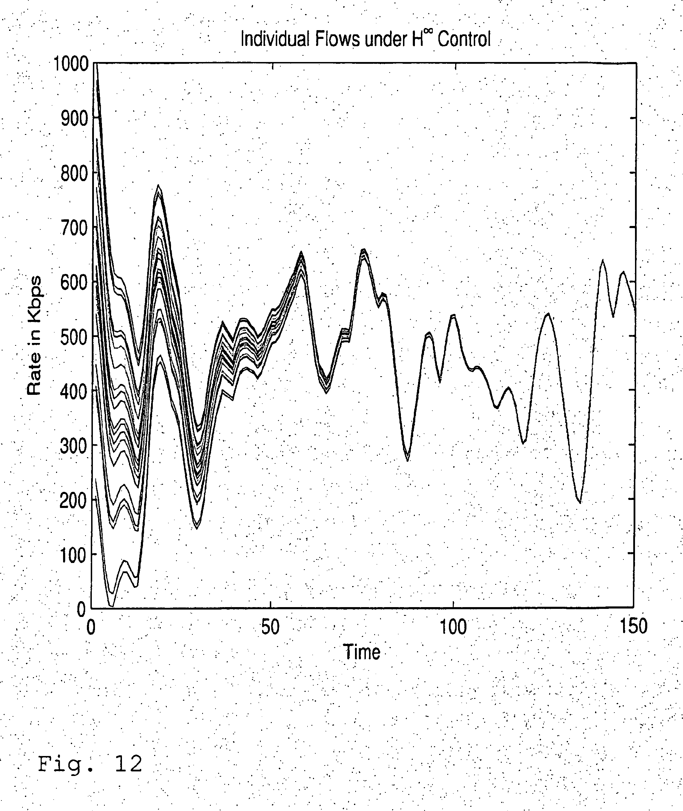

Subsequently, it is investigated the fairness'properties of our approach by simulating 20 devices with random initial flow rates on network 1. It is observed in Fig. 12 that within a short time each flow converges to an equal share of the available bandwidth or capacity. Previous simulation results in Figs. 7, 8 and 9 also show that the devices which obtain more bandwidth on network 2 get less on the other two networks, further indicating the fairness of the described approach.

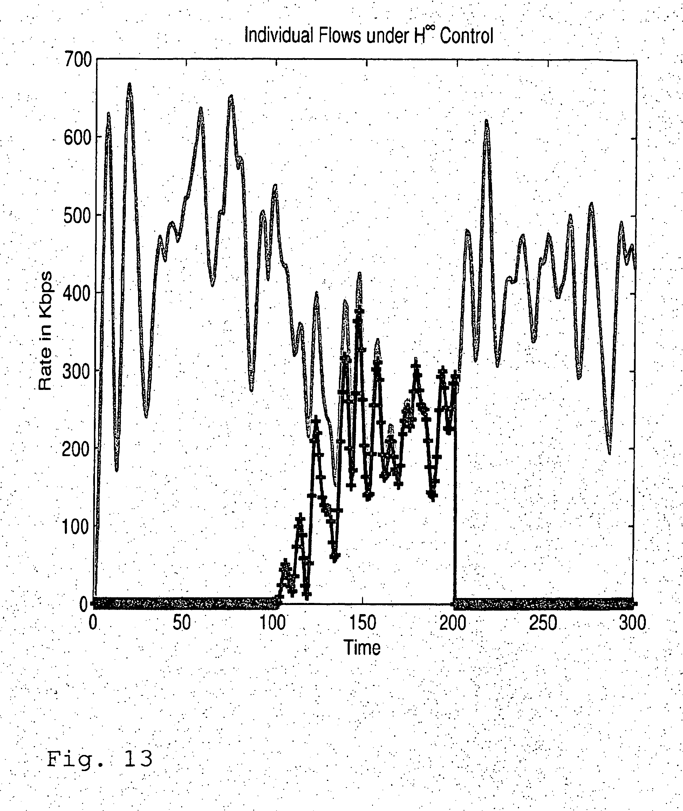

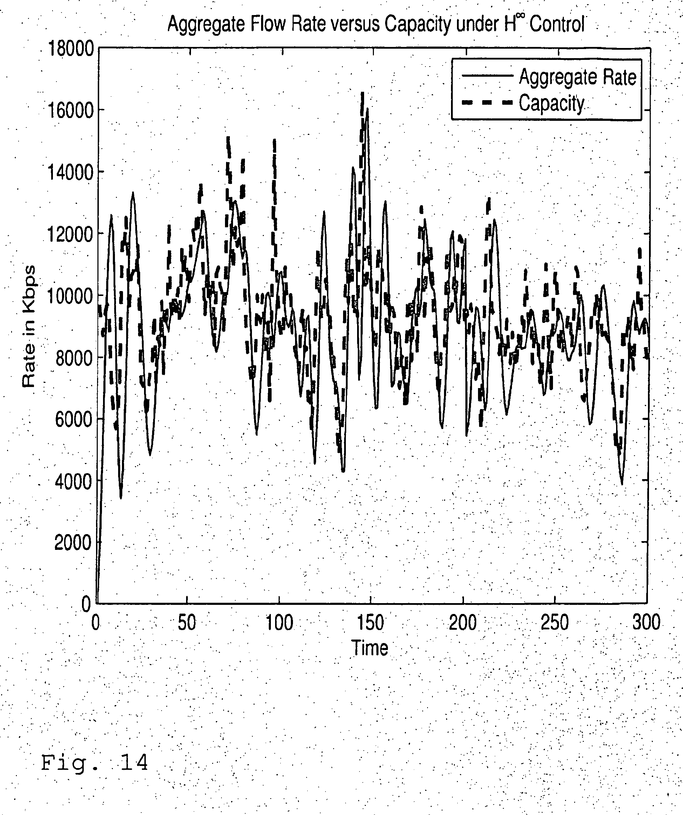

Finally, it is studied the robustness of $H^{\circ\circ}$-optimal controller with respect to variations in the number of devices. In this simulation, the results of which are shown in Figs. 13 and 14, the number of devices accessing the network is abruptly increased from 20 to 40 at time step $t$ = 100 and deactivated again at $t$ = 200. It is observed in Figs. 13 and 14 that the described algorithm successfully responds to these changes with a high convergence speed.

The invention proposes a robust flow control method and system based on $H^{\circ\circ}$-optimal control theory for the purpose of efficient utilization of multiple heterogeneous networks and a fair bandwidth allocation to devices accessing them. Bandwidth and delay measurements of different network types in a real world setting have indicated random fluctuations of these quantities and justified the necessity of a robust rate control scheme. The system has been modeled from a device's perspective and derived a minimum information rate control scheme using optimal control actions obtained through $H^\infty$ analysis and design. By reformulating the rate control problem as one of disturbance rejection $H^\infty$ control theory is utilized without making any restrictive assumptions on the random nature of network characteristics.

An efficient utilization of the access networks under the described algorithm has been established through an equilibrium analysis in the static case. Also, a LQG (as a variation of the $H^\infty$) control scheme as well as a simple AIMD algorithm have been considered for comparison purposes. The efficiency, fairness, and robustness properties of the $H^\infty$-optimal rate controller described herein have been demonstrated via simulations using the measured real world network characteristics.

**Claims**

1. A method for dynamic transmission rate control of a communication device (100), which is connectable to at least two different access networks (200a, 200b, 200c), comprising the steps of

   a) establishing a data connection between the communication device (100) and a destination node (300),
   b) routing through each of said different access networks (200a, 200b, 200c) a separate data flow associated with said data connection, wherein the transmission rate of each data flow is separately adjustable,
   c) estimating for each access network (200a, 200b, 200c) the available bandwidth for data transmission,
   d) calculating for each access network (200a, 200b, 200c) a control value depending on the estimated available bandwidth of the respective access network (200a, 200b, 200c), and
   e) adjusting for each of said different access.networks (200a, 200b, 200c) the transmission rate for the respective data flow depending on the respective control value,

   wherein

steps c) to e) are performed repeatedly at predefined times, wherein a feedback control for adjusting the transmission rate for each of said different access networks (200a, 200b, 200c) is established by repeatedly performing steps c) to e), wherein said feedback control is an $H^\infty$-optimal control adapted to minimize a pre-defined cost functional and said control value is determined by means of an $H^\infty$-controller.

2. The method of claim **1**, wherein the step of estimating the available bandwidth for data transmission of the respective access network (200a, 200b, 200c) is performed with a limited accuracy, and wherein said feedback control is adapted to simultaneously

    - maximize usage of the data transmission capacity of the respective access network and
    - minimize fluctuations in the transmission rate of the respective data flow resulting from adjustments.

3. The method of any one of the preceding claims, wherein in step d) said control value is calculated depending on a pre-defined preference for at least one of said different access networks (200a, 200b, 200c).

4. The method of claim **3**, wherein said preference is represented by a matrix.

5. The method of claim **3** or **4**, comprising the steps of

    - measuring at predefined times predetermined network characteristics of at least one of said different access networks (200a, 200b, 200c), and
    - updating said pre-defined preference depending on the measured network characteristics.

6. The method of claim **5**, wherein the predetermined network characteristics comprise the available bit rate and/or a delay time of at least one of said different access networks (200a, 200b, 200c).

7. The method of any one of the preceding claims, wherein the data transmission capacity of at least one of said different access networks (200a, 200b, 200c) varies with time.

8. The method of any one of the preceding claims, wherein at least one of said access networks (200a, 200b, 200c) is based on Ethernet, WLAN, GPRS, UMTS, DSL or Bluetooth.

9. The method of any one of the preceding claims, wherein steps a) to e) are performed separately and independently for a plurality of communication devices (100-1 - 100-N) simultaneously accessing said at least two different access networks (200a, 200b, 200c) and by repeatedly performing steps c) to e) a separate feedback control is established for each of said plurality of communication devices (100-1 - 100-N), wherein said feedback control is adapted

    - to provide a fair distribution of bandwidth for data transmission among said plurality of communication devices (100-1 - 100-N), and/or
    - to maximize overall capacity usage.of said different access networks (200a, 200b, 200c) by said plurality of communication devices (100-1 - 100-N), and/or
    - to minimize adjustments to the transmission rates.

10. A communication device (100) adapted to establish a data connection to a destination node (300), wherein separate data flows associated with said data connection are routed through at least two different access networks (200a, 200b, 200c), said device comprising

    - at least two network interfaces (104a, 104b, 104c) each associated with a respective one of said different access networks (200a, 200b, 200c),
    - bandwidth estimating means (103a) for determining an estimated value of the available bandwidth for data transmission for each of said different access networks (200a, 200b, 200c),
    - calculating means (103b, 103c) for calculating a control value for each of said different access networks (200a, 200b, 200c) depending on an estimated available bandwidth of the respective access network (200a, 200b, 200c) provided by said bandwidth estimating means (103a), and
    - for each of said network interfaces (104a, 104b, 104c) means (103c) for adjusting the transmission rate of a data flow routed through the respective interface (104a, 104b, 104c) using a respective control value provided by said calculating means (103b, 103c), wherein

EP 1 981 212 B1

said calculating means (103b, 103c) is provided as a feedback control unit adapted to establish a feedback control for adjusting the transmission rate for each of said different access networks (200a, 200b, 200c), wherein said feedback control unit is adapted to calculate an $H^\infty$-controller based on an $H^\infty$-optimal control model for minimizing a predefined cost functional.

11. The communication device (100) of claim **10**, wherein said bandwidth estimating means (103a) is adapted to determine an estimated value of the available bandwidth for each of said different access networks (200a, 200b, 200c) repeatedly at predefined times.

12. The communication device (100) of claim **10** or **11**, wherein said bandwidth estimating means (103a) provides estimated values of the available bandwidth only with a limited accuracy, and wherein
said feedback control unit is adapted to establish a feedback control for each of said different access networks which simultaneously

   - maximizes usage of the data transmission capacity of the respective access network and
   - minimizes fluctuations in the transmission rate of the respective data flow resulting from adjustments.

13. The communication device (100) of any one of claims **10** to **12**, wherein said feedback control unit is adapted for adjusting the transmission rates for each of said different access networks (200a, 200b, 200c) in such a way that, when said device (100) accesses said at least two different access networks (200a, 200b, 200c) as one of a plurality of similar communication devices (100- - 100-N) simultaneously accessing said different access networks (200a, 200b, 200c),

   - a fair distribution of bandwidth for data transmission is provided among said plurality of communication devices (100- - 100-N) and/or,
   - overall capacity usage of said different access networks (200a, 200b, 200c) by said plurality of communication devices (100- - 100-N) is maximized, and/or
   - adjustments to transmission rates performed by the feedback control units of the plurality of communication devices (100- - 100-N) are minimized.

14. The communication device (100) of any one of the preceding claims, wherein said calculation means (103b, 103c) is adapted to calculate a control value depending on a pre-defined preference for at least one of said different access networks (200a, 200b, 200c).

15. The communication device (100) of claim **14**, wherein said pre-defined preference is provided by a matrix representation stored in a memory unit of the device (100).

16. The communication device (100) of claim **14** or **15**, comprising means (103a) for measuring at predefined times predetermined network characteristics of at least one of said different access networks (200a, 200b, 200c), wherein said communication device (100) is adapted to update said predefined preference depending on measured network characteristics.

17. The communication device (100) of claim **16**, wherein the predetermined network characteristics comprise the available bit rate and/or a delay time of at least one of said different access networks (200a, 200b, 200c).

18. The communication device (100) of any one of the preceding claims, wherein at least one of said network interfaces (104a, 104b, 104c) is adapted for accessing an access network (200a, 200b, 200c) which is based on Ethernet, WLAN, GPRS, UMTS, DSL or Bluetooth.

19. A communication system (500), comprising

   - at least two different access networks (200a, 200b, 200c),
   - a plurality of communication devices (100-1 - 100-N) according to any one of claims 10 to **18**, simultaneously connectable to said different access networks (200a, 200b, 200c).

20. The communication system (500) of claim **19**, wherein said at least two different access networks (200a, 200b, 200c) are connected to a core network (400).

13

**Patentansprüche**

1. Verfahren zur dynamischen Steuerung der Übertragungsrate einer Kommunikationsvorrichtung (100), die mit mindestens zwei unterschiedlichen Zugangsnetzen (200a, 200b, 200c) verbindbar ist, welches folgende Schritte umfasst :

   a) Herstellen einer Datenverbindung zwischen der Kommunikationsvorrichtung (100) und einem Zielknoten (300),
   b) Leiten, durch jedes der unterschiedlichen Zugangsnetze (200a, 200b, 200c), eines der Datenverbindung zugeordneten separaten Datenstroms, wobei die Übertragungsrate jedes Datenstroms separat anpassbar ist,
   c) Schätzen der verfügbaren Bandbreite für die Datenübertragung für jedes Zugangsnetz (200a, 200b, 200c),
   d) Berechnen eines Stellwertes in Abhängigkeit von der geschätzten verfügbaren Bandbreite des jeweiligen Zugangsnetzes (200a, 200b, 200c) für jedes Zugangsnetz (200a, 200b, 200c), und
   e) Anpassen der Übertragungsrate für den jeweiligen Datenstrom in Abhängigkeit von dem entsprechenden Stellwertes für jedes der unterschiedlichen Zugangsnetze (200a, 200b, 200c), wobei

   die Schritte c) bis e) wiederholt zu vordefinierten Zeitpunkten ausgeführt werden, wobei durch wiederholtes Ausführen der Schritte c) bis e) eine Regelung zum Anpassen der Übertragungsrate für jedes der unterschiedlichen Zugangsnetze (200a, 200b, 200c) realisiert wird, wobei die Regelung eine optimale $H^\infty$-Regelung darstellt, die dafür ausgelegt ist, ein vorgegebenes Kostenfunktional zu minimieren, und wobei der Stellwert mittels eines $H^\infty$-Reglers ermittelt wird.

2. Verfahren nach Anspruch 1, wobei der Schritt des Schätzens der verfügbaren Bandbreite für die Datenübertragung des jeweiligen Zugangsnetzes (200a, 200b, 200c) mit einer begrenzten Genauigkeit erfolgt, und wobei die Regelung dafür ausgelegt ist, gleichzeitig

   - die Nutzung der Datenübertragungskapazität des jeweiligen Zugangsnetzes zu maximieren und
   - Schwankungen der Übertragungsrate des jeweiligen Datenstroms, die sich durch die Anpassungen ergeben, zu minimieren.

3. Verfahren nach einem der vorhergehenden Ansprüche, wobei in Schritt d) der Stellwert in Abhängigkeit von einer vordefinierten Präferenz für mindestens eines der unterschiedlichen Zugangsnetze (200a, 200b, 200c) berechnet wird.

4. Verfahren nach Anspruch 3, wobei die Präferenz durch eine Matrix dargestellt wird.

5. Verfahren nach Anspruch 3 oder 4, umfassend die Schritte:

   - Messen vorgegebener Netzeigenschaften von mindestens einem der unterschiedlichen Zugangsnetze (200a, 200b, 200c) zu vordefinierten Zeitpunkten, und
   - Aktualisieren der vordefinierten Präferenz in Abhängigkeit von den gemessenen Netzeigenschaften.

6. Verfahren nach Anspruch 5, wobei die vorgegebenen Netzeigenschaften die verfügbare Bitrate und/oder eine Verzögerungszeit von mindestens einem der unterschiedlichen Zugangsnetze (200a, 200b, 200c) umfassen.

7. Verfahren nach einem der vorhergehenden Ansprüche, wobei die Datenübertragungskapazität von mindestens einem der unterschiedlichen Zugangsnetze (200a, 200b, 200c) im Zeitverlauf variiert.

8. Verfahren nach einem der vorhergehenden Ansprüche, wobei mindestens eines der Zugangsnetze (200a, 200b, 200c) auf Ethernet, WLAN, GPRS, UMTS, DSL oder Bluetooth basiert.

9. Verfahren nach einem der vorhergehenden Ansprüche, wobei die Schritte a) bis e) für eine Mehrzahl von Kommunikationsvorrichtungen (100-1 - 100-N), die gleichzeitig auf die mindestens zwei unterschiedlichen Zugangsnetze (200a, 200b, 200c) zugreifen, getrennt und unabhängig voneinander ausgeführt werden, und durch wiederholtes Ausführen der Schritte c) bis e) eine separate Regelung für jede der Mehrzahl von Kommunikationsvorrichtungen (100-1 - 100-N) erfolgt, wobei die Regelung dafür ausgelegt ist

   - eine gerechte Verteilung der Bandbreite für die Datenübertragung unter der Mehrzahl von Kommunikationsvorrichtungen (100-1 - 100-N) zur Verfügung zu stellen, und/oder

- die Gesamtkapazitätsauslastung der unterschiedlichen Zugangsnetze (200a, 200b, 200c) durch die Mehrzahl von Kommunikationsvorrichtungen (100-1 - 100-N) zu maximieren, und/oder
- Anpassungen der Übertragungsraten zu minimieren.

10. Kommunikationsvorrichtung (100), die dafür ausgelegt ist, eine Datenverbindung zu einem Zielknoten (300) herzustellen, wobei separate Datenströme, die der Datenverbindung zugeordnet sind, über mindestens zwei unterschiedliche Zugangsnetze (200a, 200b, 200c) geleitet werden, wobei die Einrichtung umfasst:

- mindestens zwei Netzschnittstellen (104a, 104b, 104c), denen jeweils ein jeweiliges der unterschiedlichen Zugangsnetze (200a, 200b, 200c) zugeordnet ist,
- eine Bandbreitenschätzeinrichtung (103a) zum Bestimmen eines Schätzwertes der verfügbaren Bandbreite für die Datenübertragung für jedes der unterschiedlichen Zugangsnetze (200a, 200b, 200c),
- eine Berechnungseinrichtung (103b, 103c) zum Berechnen eines Stellwertes für jedes der unterschiedlichen Zugangsnetze (200a, 200b, 200c) in Abhängigkeit von einer geschätzten verfügbaren Bandbreite des jeweiligen Zugangsnetzes (200a, 200b, 200c), die von der Bandbreitenschätzeinrichtung (103a) bereitgestellt wird, und
- für jede der Netzschnittstellen (104a, 104b, 104c) eine Einrichtung (103c) zum Anpassen der Übertragungsrate eines Datenstroms, der durch die jeweilige Schnittstelle (104a, 104b, 104c) geleitet wird, und zwar mittels eines jeweiligen Stellwertes, der von der Berechnungseinrichtung (103b, 103c) bereitgestellt wird, wobei

die Berechnungseinrichtung (103b, 103c) als eine Regelungseinheit gegeben ist, die dafür ausgelegt ist, eine Regelung zum Anpassen der Übertragungsrate für jedes der unterschiedlichen Zugangsnetze (200a, 200b, 200c) zu realisieren, wobei
die Regelungseinheit dafür ausgelegt ist, basierend auf einem optimalen $H^\infty$-Regelungsmodell einen $H^\infty$-Regler zu berechnen, um ein vorgegebenes Kostenfunktional zu minimieren.

11. Kommunikationsvorrichtung (100) nach Anspruch 10, wobei die Bandbreitenschätzeinrichtung (103a) dafür ausgelegt ist, einen Schätzwert der verfügbaren Bandbreite für jedes der unterschiedlichen Zugangsnetze (200a, 200b, 200c) wiederholt zu vordefinierten Zeitpunkten zu bestimmen.

12. Kommunikationsvorrichtung (100) nach Anspruch 10 oder 11, wobei die Bandbreitenschätzeinrichtung (103a) Schätzwerte der verfügbaren Bandbreite nur mit einer begrenzten Genauigkeit bereitstellt, und wobei die Regelungseinheit dafür ausgelegt ist, eine Regelung für jedes der unterschiedlichen Zugangsnetze zu realisieren, die gleichzeitig

- die Nutzung der Datenübertragungskapazität des jeweiligen Zugangsnetzes maximiert und
- Schwankungen der Übertragungsrate des jeweiligen Datenstroms, die sich durch die Anpassungen ergeben, minimiert.

13. Kommunikationsvorrichtung (100) nach einem der Ansprüche 10 bis 12, wobei die Regelungseinheit dafür ausgelegt ist, die Übertragungsraten für jedes der unterschiedlichen Zugangsnetze (200a, 200b, 200c) in solcher Weise anzupassen, dass,
wenn die Vorrichtung (100) auf die mindestens zwei unterschiedlichen Zugangsnetze (200a, 200b, 200c) zugreift, und zwar als eine aus einer Mehrzahl von ähnlichen Kommunikationsvorrichtungen (100- - 100-N), die gleichzeitig auf die unterschiedlichen Zugangsnetze (200a, 200b, 200c) zugreifen,

- eine gerechte Verteilung der Bandbreite für die Datenübertragung unter der Mehrzahl von Kommunikationsvorrichtungen (100- - 100-N) gegeben ist, und/oder
- die Gesamtkapazitätsauslastung der unterschiedlichen Zugangsnetze (200a, 200b, 200c) durch die Mehrzahl von Kommunikationsvorrichtungen (100- - 100-N) maximiert ist, und/oder
- Anpassungen der Übertragungsraten, die durch die Regelungseinheiten der Mehrzahl von Kommunikationsvorrichtungen (100- - 100-N) erfolgen, minimiert sind.

14. Kommunikationsvorrichtung (100) nach einem der vorhergehenden Ansprüche, wobei die Berechnungseinrichtung (103b, 103c) dafür ausgelegt ist, einen Stellwert in Abhängigkeit von einer vordefinierten Präferenz für mindestens eines der unterschiedlichen Zugangsnetze (200a, 200b, 200c) zu berechnen.

15. Kommunikationsvorrichtung (100) nach Anspruch 14, wobei die vordefinierte Präferenz durch eine Matrix-Darstellung gegeben ist, die in einer Speichereinheit der Vorrichtung (100) gespeichert ist.

**16.** Kommunikationsvorrichtung (100) nach Anspruch 14 oder 15, wobei diese eine Einrichtung (103a) zum Messen vorgegebener Netzeigenschaften von mindestens einem der unterschiedlichen Zugangsnetze (200a, 200b, 200c) zu vordefinierten Zeitpunkten umfasst, wobei die Kommunikationsvorrichtung (100) dafür ausgelegt ist, die vordefinierte Präferenz in Abhängigkeit von den gemessenen Netzeigenschaften zu aktualisieren.

**17.** Kommunikationsvorrichtung (100) nach Anspruch 16, wobei die vorgegebenen Netzeigenschaften die verfügbare Bitrate und/oder eine Verzögerungszeit von mindestens einem der unterschiedlichen Zugangsnetze (200a, 200b, 200c) umfassen.

**18.** Kommunikationsvorrichtung (100) nach einem der vorhergehenden Ansprüche, wobei mindestens eine der Netzschnittstellen (104a, 104b, 104c) zum Zugriff auf ein Zugangsnetz (200a, 200b, 200c) ausgelegt ist, das auf Ethernet, WLAN, GPRS, UMTS, DSL oder Bluetooth basiert.

**19.** Kommunikationssystem (500), umfassend:

- mindestens zwei unterschiedliche Zugangsnetze(200a, 200b, 200c),
- eine Mehrzahl von Kommunikationsvorrichtungen (100-1 - 100-N) gemäß einem der Ansprüche 10 bis 18, die gleichzeitig mit den unterschiedlichen Zugangsnetzen (200a, 200b, 200c) verbindbar sind.

**20.** Kommunikationssystem (500) nach Anspruch 19,
wobei die mindestens zwei unterschiedlichen Zugangsnetze (200a, 200b, 200c) mit einem Kernnetz (400) verbunden sind.

**Revendications**

**1.** Procédé de commande dynamique du débit de transmission d'un dispositif de communication (100) qui peut être connecté à au moins deux différents réseaux d'accès (200a, 200b, 200c), comprenant les étapes consistant à :

a) établir une connexion de données entre le dispositif de communication (100) et un noeud de destination (300) ;
b) router via chacun des différents réseaux d'accès (200a, 200b, 200c) un flux de données différents associé à ladite connexion de données, dans lequel le débit de transmission de chaque flux de données peut être ajusté séparément ;
c) estimer pour chaque réseau d'accès (200a, 200b, 200c) la bande passante disponible pour la transmission de données ;
d) calculer pour chaque réseau d'accès (200a, 200b, 200c) une valeur de commande qui dépend de la bande passante estimée du réseau d'accès (200a, 200b, 200c) respectif ;

dans lequel les étapes c) à e) sont exécutées répétitivement à des instants prédéterminés, dans lequel une commande en boucle pour l'ajustement du débit de transmission de chacun desdits différents réseaux d'accès (200a, 200b, 200c) est mise en place en exécutant répétitivement les étapes c) à e), dans lequel ladite commande en boucle est une commande optimale H$^\infty$ conçue pour minimiser une fonction de coût prédéfinie et ladite valeur de commande est déterminée à l'aide d'un contrôleur H$^\infty$.

**2.** Procédé selon la revendication 1, dans lequel l'étape d'estimation de la bande passante disponible pour la transmission de données sur le réseau d'accès (200a, 200b, 200c) respectif est exécutée avec une précision limitée et dans lequel ladite commande en boucle est conçue pour simultanément :

- maximiser l'utilisation de la capacité de transmission de données du réseau d'accès respectif ; et
- minimiser les fluctuations du débit de transmission des flux de données respectifs à la suite d'ajustements.

**3.** Procédé selon l'une quelconque des revendications précédentes, dans lequel, dans l'étape d), ladite valeur de commande est calculée en fonction d'une préférence prédéfinie en faveur d'au moins un desdits différents réseaux d'accès (200a, 200b, 200c).

**4.** Procédé selon la revendication 3, dans lequel ladite préférence est représentée par une matrice.

**5.** Procédé selon la revendication 3 ou 4, comprenant les étapes consistant à :

- mesurer à des instants prédéfinis des caractéristiques de réseau prédéterminées sur au moins un desdits différents réseaux d'accès (200a, 200b, 200c) ; et
- mettre à jour ladite préférence prédéfinie en fonction des caractéristiques de réseau mesurées.

6. Procédé selon la revendication 5, dans lequel les caractéristiques de réseau prédéterminées comprennent le débit binaire disponible et/ou un temps de retard d'au moins un desdits différents réseaux d'accès (200a, 200b, 200c).

7. Procédé selon l'une quelconque des revendications précédentes, dans lequel la capacité de transmission de données d'au moins un desdits différents réseaux d'accès (200a, 200b, 200c) varie dans le temps.

8. Procédé selon l'une quelconque des revendications précédentes, dans lequel au moins un desdits différents réseaux d'accès (200a, 200b, 200c) est fondé sur Ethernet, WLAN, GPRS, UMTS, DSL ou Bluetooth.

9. Procédé selon l'une quelconque des revendications précédentes, dans lequel les étapes a) à e) sont exécutées séparément et indépendamment pour une pluralité de dispositifs de communication (100-1 à 100-N) qui accèdent simultanément auxdits au moins deux différents réseaux d'accès (200a, 200b, 200c) et une commande en boucle séparée est créée en exécutant répétitivement les étapes c) à e) pour chaque dispositif dans ladite pluralité de dispositifs de communication (100-1 à 100-N) et dans lequel ladite commande en boucle est conçue pour :

   - fournir une distribution équitable de la bande passante pour la transmission de données entre ladite pluralité de dispositifs de communication (100-1 à 100-N) ; et/ou
   - maximiser l'utilisation globale de la capacité desdits différents réseaux d'accès (200a, 200b, 200c) par ladite pluralité de dispositifs de communication (100-1 à 100-N) ; et/ou
   - minimiser les ajustements des débits de transmission.

10. Dispositif de communication (100) conçu pour établir une connexion de données avec un noeud de destination (300), dans lequel des flux de données séparés associés à ladite connexion de données sont routés via au moins deux différents réseaux d'accès (200a, 200b, 200c), ledit dispositif comprenant :

    - au moins deux interfaces de réseau (104a, 104b, 104c), chacune étant associée à un réseau respectif parmi lesdits différents réseaux d'accès (200a, 200b, 200c) ;
    - un moyen d'estimation de la bande passante (103a) destiné à déterminer une valeur estimée de la bande passante disponible pour la transmission de données desdits différents réseaux d'accès (200a, 200b, 200c) ;
    - un moyen de calcul (103b, 103c) destiné à calculer une valeur de commande pour chacun desdits différents réseaux d'accès (200a, 200b, 200c) en fonction d'une bande passante disponible estimée du réseau d'accès (200a, 200b, 200c) respectif qui est fournie par ledit moyen d'estimation de la bande passante (103a) ; et
    - pour chacune desdites interfaces de réseau (104a, 104b, 104c), un moyen (103c) destiné à ajuster le débit de transmission d'un flux de données routé via les interfaces respectives (104a, 104b, 104c) en utilisant une valeur de commande respective fournie par ledit moyen de calcul (103b, 103c) ;

    dans lequel ledit moyen de calcul (103b, 103c) est fourni sous la forme d'une unité de commande en boucle conçue pour établir une commande en boucle afin d'ajuster le débit de transmission de chacun desdits différents réseaux d'accès (200a, 200b, 200c) ;
    dans lequel ladite unité de commande en boucle est conçue pour calculer un contrôleur $H^\infty$ fondé sur un modèle de commande optimale $H^\infty$ pour minimiser une fonction de coût prédéfinie.

11. Dispositif de communication (100) selon la revendication 10, dans lequel ledit moyen d'estimation de la bande passante (103a) est conçu pour déterminer une valeur estimée de la bande passante disponible pour chacun des différents réseaux d'accès (200a, 200b, 200c) répétitivement à des instants prédéfinis.

12. Dispositif de communication (100) selon la revendication 10 ou 11, dans lequel ledit moyen d'estimation de la bande passante (103a) fournit des valeurs estimée de la bande passante disponible uniquement avec une précision limitée et dans lequel ladite unité de commande en boucle est conçue pour établir pour chacun desdits différents réseaux d'accès une commande en boucle qui, simultanément :

    - maximise l'utilisation de la capacité de transmission de données du réseau d'accès respectif ; et
    - minimise les fluctuations du débit de transmission des flux de données respectifs à la suite d'ajustements.

**13.** Dispositif de communication (100) selon l'une quelconque des revendications 10 à 12, dans lequel ladite unité de commande en boucle est conçue pour ajuster les débits de transmission de chacun des différents réseaux d'accès (200a, 200b, 200c) d'une manière à, lorsque ledit dispositif (100) accède auxdits au moins deux différents réseaux d'accès (200a, 200b, 200c) au sein d'une pluralité de dispositifs de communication (100-1 à 100-N) qui accèdent simultanément auxdits différents réseaux d'accès (200a, 200b, 200c) :

- assurer une distribution équitable de la bande passante pour la transmission de données au sein de ladite pluralité de dispositifs de communication (100-1 à 100-N) ; et/ou
- maximiser l'utilisation de la capacité globale desdits différents réseaux d'accès (200a, 200b, 200c) par ladite pluralité de dispositifs de communication (100-1 à 100-N) ; et/ou
- minimiser les ajustements des débits de transmission effectués par les unités de commande en boucle de la pluralité de dispositifs de communication (100-1 à 100-N).

**14.** Dispositif de communication (100) selon l'une quelconque des revendications précédentes, dans lequel ledit moyen de calcul (103b, 103c) est conçu pour calculer une valeur de commande en fonction d'une préférence prédéfinie pour au moins un desdits différents réseaux d'accès (200a, 200b, 200c).

**15.** Dispositif de communication (100) selon la revendication 14, dans lequel ladite préférence prédéfinie est fournie sous la forme d'une représentation matricielle stockée dans une unité de mémoire du dispositif (100).

**16.** Dispositif de communication (100) selon la revendication 14 ou 15, comprenant un moyen (103a) destiné à mesurer à des instants prédéfinis des caractéristiques de réseau prédéterminées d'au moins un desdits différents réseaux d'accès (200a, 200b, 200c), dans lequel ledit dispositif de communication (100) est conçu pour mettre à jour ladite préférence prédéfinie en fonction des caractéristiques de réseau mesurées.

**17.** Dispositif de communication (100) selon la revendication 16, dans lequel les caractéristiques de réseau prédéterminées comprennent le débit binaire disponible et/ou un temps de retard d'au moins un desdits différents réseaux d'accès (200a, 200b, 200c).

**18.** Dispositif de communication (100) selon l'une quelconque des revendications précédentes, dans lequel au moins une desdites interfaces de réseau (104a, 104b, 104c) est conçue pour accéder à un réseau d'accès (200a, 200b, 200c) qui est fondé sur Ethernet, WLAN, GPRS, UMTS, DSL ou Bluetooth.

**19.** Système de communication (500) comprenant :

- au moins deux différents réseaux d'accès (200a, 200b, 200c) ;
- une pluralité de dispositifs de communication (100-1 à 100-N) selon l'une quelconque des revendications 10 à 18 qui peuvent être connectés simultanément auxdits différents réseaux d'accès (200a, 200b, 200c).

**20.** Système de communication (500) selon la revendication 19, dans lequel lesdits au moins deux différents réseaux d'accès (200a, 200b, 200c) sont connectés à un réseau d'interconnexion (400).

Fig. 1

100

102

103

103b

103c

Applications on Device

Internal Network Model

H-infinity-optimal Robust Rate Control Subsystem

Network Measurement Tool

103a

104a

104b

104c

Ethernet interface

Bluetooth interface

WLAN interface

200a

200b

200c

Ethernet

Bluetooth

WLAN

Fig. 2

Fig. 3

Fig. 4

Fig. 5

Fig. 6

Fig. 7

Fig. 8

Fig. 9

Fig. 10

Fig. 11

Individual Flows under H∞ Control

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060015636 A1

- US 20060193295 A1

**Non-patent literature cited in the description**

- **K. ROJVIBOONCHAI et al.** A Study on Rate-Based Multi-Path Transmission control Protocol (R-M/TCP) Using Packet Scheduling Algorithm. *IEICE Trans. Inf. & Syst.,* January 2006, vol. E89-D (1

- **T. BASAR ; P. BERNHARD.** H-infinity Optimal Control and Related Minimax Design Problems: A Dynamic Game Approach. Birkhauser, 1995